# EUROPÄISCHE PATENTSCHRIFT

(11) **EP 2 598 100 B1**
(45) Veröffentlichungstag und Bekanntmachung des Hinweises auf die Patenterteilung: **27.08.2014**
(21) Anmeldenummer: 11716200.8
(22) Anmeldetag: 13.04.2011
(51) Int. Cl.: G01N 23/12, G01N 33/15, B65B 3/26, G01G 9/00, B65B 1/30

(54) **EINRICHTUNG UND VERFAHREN ZUR GEWICHTSBESTIMMUNG VON PHARMAZEUTISCHEN PRODUKTEN MITTELS EINER RÖNTGENSTRAHLUNGSQUELLE**
DEVICE AND METHOD FOR DETERMINING THE WEIGHT OF PHARMACEUTICAL PRODUCTS BY MEANS OF AN X-RAY SOURCE
DISPOSITIF ET PROCEDE POUR LA DETERMINATION DU POIDS DE PRODUITS PHARMACEUTIQUES AU MOYEN D'UNE SOURCE DE RAYONS X

(30) Priorität: 28.07.2010 DE 102010038544
(43) Veröffentlichungstag der Anmeldung: 05.06.2013
(73) Patentinhaber: Robert Bosch GmbH, 70442 Stuttgart (DE)
(72) Erfinder: RUNFT, Werner, 71364 Winnenden (DE); MAGA, Iulian, 71638 Ludwigsburg (DE); VOGT, Martin, 73614 Schorndorf (DE); SCHLIPF, Jens, 71691 Freiberg A. N. (DE)
(86) Internationale Anmeldenummer: PCT/EP2011/055817
(87) Internationale Veröffentlichungsnummer: WO 2012/013368

(56) Entgegenhaltungen:
- WO-A1-97/31244
- WO-A1-2009/012097

## Beschreibung

### Stand der Technik

Die Erfindung betrifft eine Einrichtung zur Gewichtsbestimmung von pharmazeutischen Produkten mittels einer Röntgenstrahlungsquelle nach dem Oberbegriff des Anspruchs 1. Ferner betrifft die Erfindung ein Verfahren zur Gewichtsbestimmung mittels einer erfindungsgemäßen Einrichtung.

Eine Einrichtung nach dem Oberbegriff des Anspruchs 1 ist aus der DE 102010038544 (Prio Dok) der Anmelderin bekannt. Die bekannte Einrichtung umfasst eine Röntgenstrahlungsquelle, die zur Gewichtsbestimmung der mit einem Pharmazeutika befüllten, insbesondere als Hartgelatinekapseln ausgebildeten Produkte dient. Hierbei wird das pharmazeutische Produkt von der Röntgenstrahlungsquelle durchleuchtet und die Strahlung, die das pharmazeutische Objekt durchdringt mittels eines bildaufnehmenden Sensorelements erfasst. Eine Auswerteeinrichtung der vorbekannten Einrichtung ermittelt dann z.B. aus den erfassten Grauwerten des Bildes des pharmazeutischen Produkts ein Füllgewicht für das pharmazeutische Produkt. Nachteilig dabei ist, dass sich aufgrund sich verändernder Bedingungen die von dem Sensorelement erfasstem Werte selbst bei ein und demselben pharmazeutischen Produkt von Bild zu Bild ändern, so dass eine konkrete Zuordnung des Bildes bzw. von Graustufen zu einem bestimmten Füllgewicht in der Kapsel erschwert ist. Derartige Veränderungen sind bei nacheinander aufgenommenen Bildern nur an den Stellen erkennbar, bei denen eine freie Durchstrahlung möglich ist. Damit lassen sich aber insbesondere bei der Ermittlung des Füllgewichts über Graustufen die Änderungen nicht eindeutig kompensieren.

### Offenbarung der Erfindung

Ausgehend von dem dargestellten Stand der Technik liegt der Erfindung die Aufgabe zugrunde, eine Einrichtung zur Gewichtsbestimmung von pharmazeutischen Produkten mittels einer Röntgenstrahlungsquelle derart weiterzubilden, dass Störeinflüsse aufgrund von Schwankungen des Gesamtsystems, oder aber auch durch externe Störeinflüsse, erkannt und kompensiert werden können, so dass eine besonders gute Genauigkeit der Gewichtsbestimmung der pharmazeutischen Produkte erzielt wird. Die Aufgabe wird bei einer Einrichtung zur Gewichtsbestimmung von pharmazeutischen Produkten mittels einer Röntgenstrahlungsquelle mit den Merkmalen des Anspruchs 1 erfindungsgemäß dadurch gelöst, dass im Strahlengang des Strahlungskegels ein Referenzobjekt angeordnet ist, wobei die Strahlung des durchleuchteten Referenzobjektes mittels eines Sensorelements erfasst und der Auswerteeinrichtung zugeführt wird, und wobei das pharmazeutische Produkt und das Referenzobjekt in Bezug auf den Strahlungskegel in nicht überdeckender Anordnung zueinander im Strahlungskegel positioniert sind. Mit anderen Worten gesagt bedeutet dies, dass bei der Aufnahme bzw. dem Durchleuchten des pharmazeutischen Produkts gleichzeitig stets auch ein Referenzobjekt durchleuchtet wird, so dass in Verbindung mit dem Referenzobjekt die Bildinformationen der Grauwerte des pharmazeutischen Produkts auch bei Schwankungen im Gesamtsystem oder durch externe Störeinflüsse sicher zugeordnet werden können, um daraus eine besonders exakte Gewichtsbestimmung vornehmen zu können.

Vorteilhafte Weiterbildungen der erfindungsgemäßen Einrichtung zur Gewichtsbestimmung von pharmazeutischen Produkten mittels einer Röntgenstrahlungsquelle sind in den Unteransprüchen angegeben. In den Rahmen der Erfindung fallen sämtliche Kombinationen aus zumindest zwei von in den Ansprüchen, der Beschreibung und/oder den Figuren offenbarten Merkmalen.

In bevorzugter Ausgestaltung der Erfindung ist es vorgesehen, dass das Sensorelement als bildaufnehmendes Sensorelement ausgebildet ist. Mittels eines derartigen bildaufnehmenden Sensorelements lässt sich das zu untersuchende pharmazeutische Produkt sehr einfach in Bildpunkte (Pixel) aufteilen, aus denen über die Grauwerte Informationen für die Auswerteeinrichtung zur Gewichtsbestimmung gewonnen werden können.

Ganz besonders bevorzugt ist eine Ausgestaltung des Referenzobjekts, bei der das Material des Referenzobjekts eine ähnliche atomare Zusammensetzung aufweist, wie das pharmazeutische Produkt. Dadurch ergeben sich beim Durchstrahlen des Referenzobjekts dieselben physikalischen Eigenschaften wie für das pharmazeutische Produkt, so dass die gewonnen Bildinformationen des Referenzobjekts ohne komplizierte Umrechnungen oder Korrekturfaktoren direkt zur Gewichtsbestimmung verwendet werden können.

Bevorzugt ist weiterhin eine Ausgestaltung der Erfindung, bei der das Referenzobjekt in der gleichen Ebene angeordnet ist wie das pharmazeutische Produkt. Dadurch werden für das Referenzobjekt und das pharmazeutische Produkt mit Blick auf den Strahlungskegel bzw. die Röntgenstrahlung zumindest annähernd gleiche Voraussetzungen für die Durchstrahlung geschaffen.

Um durch das Referenzobjekt unterschiedliche Graustufen auf dem aufgenommenen Bild erzeugen zu können, ist es bevorzugt vorgesehen, dass das Referenzobjekt in einer Ebene senkrecht zum Strahlengang der Röntgenstrahlungsquelle unterschiedliche Dicken aufweist. Durch diese unterschiedlichen Dicken werden bei dem durch das Sensorelement erfassten Bild des durchstrahlten Referenzobjekts unterschiedliche Graustufen erzeugt.

Konstruktiv besonders einfach und reproduzierbar lassen sich derartige Graustufen durch das Referenzobjekt erzeugen, wenn das Referenzobjekt stufen- oder keilförmig ausgebildet ist. Hierbei lassen sich durch eine stufenförmige Ausbildung diskrete Graustufen am Bild des durchleuchteten Referenzobjekts erzielen, wobei zur Verbesserung der Auflösung bzw. zur Erhöhung der Messgenauigkeit die Anzahl der Stufen bzw. Treppen so groß als möglich gewählt werden sollte. Alternativ kann auch ein keilförmiges Referenzobjekt verwendet werden, das durch seine Keilform kontinuierlich sich ändernde Grauwerte erzeugt.

Um alle erfassten Grauwerte bzw. Graustufen des durchleuchteten pharmazeutischen Produkts bewerten zu können, ist es darüber hinaus besonders bevorzugt vorgesehen, dass das Referenzobjekt eine Dämpfung der Röntgenstrahlen erzeugt, die an einer Stelle größer und an einer anderen Stelle kleiner ist als die durch das pharmazeutische Produkt erzeugte Dämpfung. Dadurch ist sichergestellt, dass alle üblicherweise beim Durchleuchten des pharmazeutischen Produkts vorkommenden Grauwerte über das Referenzobjekt abgedeckt sind.

Um bei einer treppen- oder keilförmigen Ausbildung des Referenzobjekts die einzelnen Stufen des Referenzobjekts bzw. deren Fläche zu maximieren, ist es darüber hinaus besonders bevorzugt vorgesehen, dass die Fläche des Referenzobjekts senkrecht zum Strahlungskegel ausgerichtet ist.

Die Erfindung umfasst auch ein Verfahren zur Gewichtsbestimmung von pharmazeutischen Produkten mittels einer erfindungsgemäßen Einrichtung. Dabei ist es vorgesehen, dass mittels der Röntgenstrahlungsquelle das pharmazeutische Produkt und das Referenzobjekt gleichzeitig durchstrahlt werden, dass mittels wenigstens eines bildaufnehmenden Sensorelements ein Bild des durchstrahlten pharmazeutischen Produkts und des Referenzobjekts der Auswerteeinrichtung zugeführt wird, dass die Auswerteeinrichtung Bildpunkt für Bildpunkt des durchstrahlten pharmazeutischen Produkts auf dessen Graustufe untersucht, der Graustufe des jeweiligen Bildpunkts eine gleiche Graustufe am Referenzobjekt und damit eine Dicke des Referenzobjekts zuordnet, dass anschließend über alle Bildpunkte eine mittlere Dicke ermittelt wird, dass danach in Kenntnis der Anzahl und der Fläche der Bildpunkte mit Hilfe der mittleren Dicke ein virtuelles Volumne des pharmazeutischen Produkts berechnet wird, und dass das virtuelle Volumen des pharmazeutischen Produkts zuletzt zur Gewichtebestimmung des pharmazeutischen Produkts mit der Dichte des pharmazeutischen Produkts multipliziert wird.

Ganz besonders bevorzugt ist ein Verfahren, bei der bei aufeinanderfolgenden Aufnahmen die Graustufen des Referenzobjekts miteinander verglichen werden und bei einer Abweichung die aktuellen Graustufen des Referenzobjekts mit einem Korrekturfaktor belegt werden. Dadurch ist auch bei einem längeren Betrieb der Einrichtung, bei der durch Änderung am System oder durch äußere Störeinflüsse sich Parameter verändern, sichergestellt, dass sich die Einrichtung selbst nachjustiert.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: einen vereinfachten Längsschnitt einer Einrichtung zur Gewichtsbestimmung von Hartgelatinekapseln,
- Fig. 2: eine vereinfachte Draufsicht auf eine gegenüber Fig. 1 modifizierte Einrichtung unter Verwendung erfindungsgemäßer Referenzobjekte,
- Fig.3 und 4: jeweils vereinfachte Schnitte durch unterschiedliche Ausführungsformen eines erfindungsgemäßen Referenzobjekts und
- Fig. 5: ein mittels eines bildaufnehmenden Sensors aufgenommenen Bildes der Vorrichtung gemäß Fig. 2.

Gleiche Bauteile bzw. Bauteile mit gleicher Funktion sind in den Figuren mit den gleichen Bezugsziffern versehen.

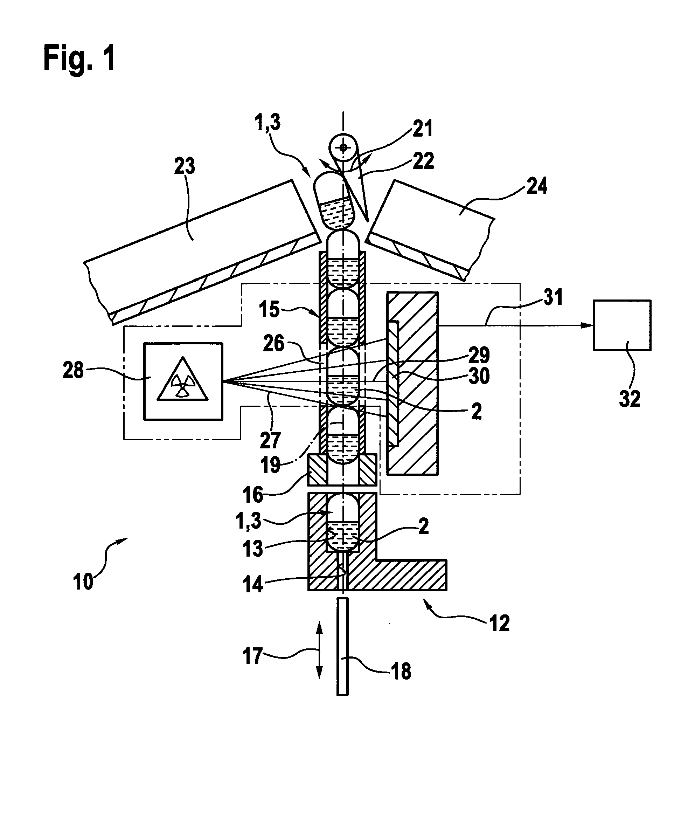

In der Fig. 1 ist der grundsätzliche Aufbau einer Einrichtung 10 zur Gewichtsbestimmung von pharmazeutischen Produkten 1 dargestellt. Hierbei handelt es sich bei den pharmazeutischen Produkten 1 insbesondere um mit einem Pharmazeutika 2 und ggf. Hilfs- oder Zusatzstoffen befüllte Hartgelatinekapsel 3. Es liegt jedoch auch im Rahmen der Erfindung, mittels der Einrichtung 10 das Gewicht z.B. von Tabletten oder ähnlichem zu bestimmen.

Die Einrichtung 10 umfasst ein in einer vertikalen Drehachse schrittweise gedrehtes, in der Fig. 1 lediglich ausschnittsweise dargestellten Förderrad 12, an dessen Oberseite sich mehrere, vertikal ausgerichtete, als Bohrungen ausgebildete Aufnahmen 13 für jeweils ein pharmazeutisches Produkt 1 befinden, wobei in der Fig. 1 lediglich eine Aufnahme 13 erkennbar ist. Am Grund der Aufnahme 13 ist eine Durchgangsbohrung 14 ausgebildet, die einen kleineren Durchmesser aufweist als die Aufnahme 13.

Mittels des schrittweise gedrehten Förderrades 12 wird in einer Stillstandsphase des Förderrades 12 wenigstens eine Aufnahme 13 unterhalb eines rohrförmigen Förderschachts 15 positioniert. Der Förderschacht 15 weist auf der der Aufnahme 13 zugewandten Seite einen im Durchmesser verringerten Abschnitt 16 auf, dessen Durchmesser derart bemessen ist, dass eine sich im Bereich des Abschnitts 16 befindliche Hartgelatinekapsel 3 in kraftschlüssiger Verbindung mit dem Abschnitt 16 befindet, d.h. im Abschnitt 16 eingeklemmt ist. Unterhalb der Durchgangsbohrung 14 ist auf der dem Förderschacht 15 abgewandten Seite ein entsprechend des Doppelpfeils 17 auf- und abbeweglicher Einschubstößel 18 angeordnet. Mittels des Einschubstößels 18 wird die jeweils in der Aufnahme 13 befindliche Hartgelatinekapsel 3 aus Ihrer Aufnahme 13 in einen Bereich oberhalb des Abschnitts 16 des Förderschachts 15 übergeschoben, so dass das Förderrad 12 zur Abgabe der nächsten Hartgelatinekapsel(n) 3 weitergedreht werden kann, ohne dass die zuletzt in den Förderschacht 15 übergeschobene Hartgelatinekapsel 3 infolge Ihrer Gewichtskraft nach unten aus dem Förderschacht 15 herausfällt.

Der Förderschacht 15 weist einen Querschnitt auf, der dem Querschnitt der Hartgelatinekapsel 3 angepasst bzw. etwas größer als dieser ist. Im Ausführungsbeispiel ist der Förderschacht 15 bzw. dessen Längsachse zusammen mit den Längsachsen 19 der Hartgelatinekapseln 3 vertikal angeordnet. Am oberen Ende des Förderschachts 15 ist eine entsprechend des Doppelpfeils 21 hin- und her schwenkbare Klappe 22 angeordnet, die die jeweils aus dem Förderschacht 15 ausgeschobene Hartgelatinekapsel 3, ja nach Stellung der Klappe 22, entweder einer ersten Abführrinne 23, oder einer zweiten Abführrinne 24 zuführt. Dabei werden über die erste Abführrinne 23 beispielsweise diejenigen Hartgelatinekapseln 3 weitergefördert, die als "Gut"-Hartgelatinekapseln 3 bewertet werden, während über die zweite Abführrinne 24 diejenigen Hartgelatinekapseln 3 weitergeführt werden, die als "Schlecht"-Hartgelatinekapseln 3 bewertet werden.

In einem etwa mittleren Bereich weist der Förderschacht 15 einen für Röntgenstrahlung durchlässigen Abschnitt 26 auf. Der Abschnitt 26 wird von dem Strahlungskegel 27 einer Röntgenstrahlungsquelle 28 durchstrahlt, dessen mittlere Strahlungsachse 29 vorzugsweise, jedoch nicht einschränkend horizontal ausgerichtet ist, d.h. senkrecht zur Längsachse 19 verläuft. Auf der der Röntgenstrahlungsquelle 28 gegenüberliegenden Seite des Abschnitts 26 ist ein Detektor in Form eines bildaufnehmenden Sensorelements 30 angeordnet, der über eine Leitung 31 mit einer Auswerteinrichtung 32 gekoppelt ist. Die Auswerteeinrichtung 32 dient gleichzeitig der zumindest mittelbaren Ansteuerung der Position der Klappe 22.

Mittels der Röntgenstrahlungsquelle 28, des Sensorelements 30 und der Auswerteeinrichtung 32 wird in Verbindung mit einem später noch näher erläuterten Referenzobjekt 35, das in der Fig. 1 nicht erkennbar ist, da es in einer Ebene senkrecht zur Zeichenebene der Fig. 1 befindet, das Gewicht des Pharmazeutika 2 in der Hartgelatinekapsel 3 bestimmt, so dass (neben ggf. anderen Kriterien) das Ergebnis dazu dient, "Gut"- Hartgelatinekapseln 3 von "Schlecht"-Hartgelatinekapseln 3 zu unterscheiden.

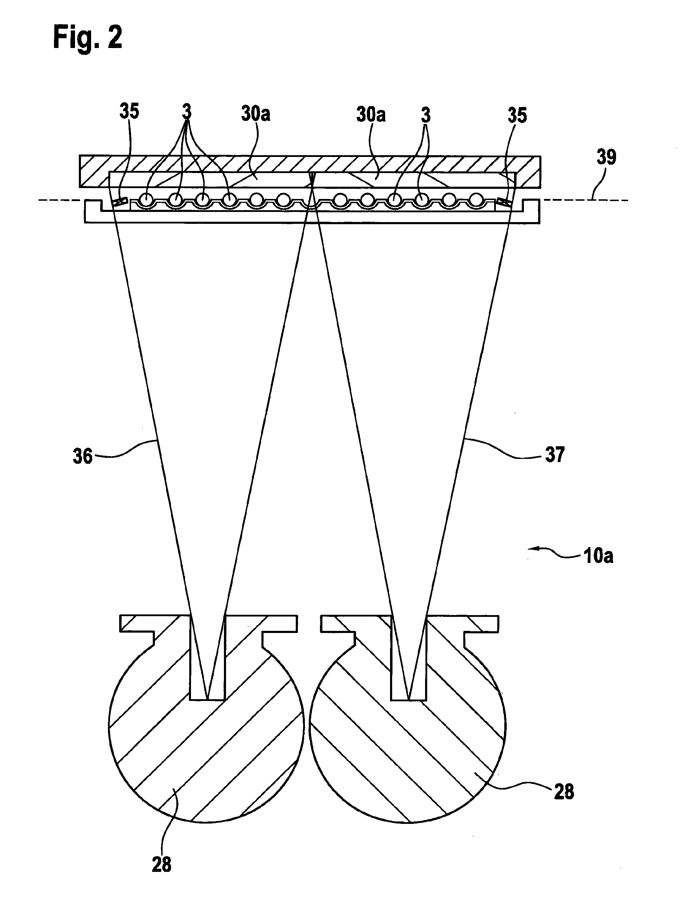

Die in der Fig. 2 dargestellte modifizierte Einrichtung 10a unterscheidet sich von der Fig. 1 dadurch, dass die Einrichtung 10a zwei nebeneinander angeordnete Röntgenstrahlungsquellen 28 aufweist, deren Strahlungskegel 36, 37 jeweils mehrere Hartgelatinekapseln 3, im Ausführungsbeispiel jeweils sechs Hartgelatinekapseln 3 sowie jeweils ein Referenzobjekt 35 gleichzeitig durchstrahlen. Auf der den Röntgenstrahlungsquellen 28 gegenüberliegenden Seite der Hartgelatinekapseln 3 sind dabei zwei getrennte bildaufnehmende Sensorelemente 30a angeordnet, so dass jedes der Sensorelemente 30a einer Röntgenstrahlungsquelle 28 zugeordnet ist.

Selbstverständlich liegt es auch im Rahmen der Erfindung, für beiden Röntgenstrahlungsquellen 28 ein gemeinsames bildaufnehmendes Sensorelement 30a zu verwenden.

Das eine Referenzobjekt 35, das dem Strahlungskegel 36 zugeordnet ist, befindet sich in Draufsicht am linken Randbereich des Strahlungskegels 36, während das andere Referenzobjekt 35, das dem Strahlungskegel 37 zugeordnet ist, sich an dem rechten Rand des Strahlungskegels 37 befindet. Weiterhin erkennt man, dass sich die beiden Referenzobjekte 35 in Bezug auf den jeweiligen Strahlungskegel 36, 37 in der gleichen Ebene 39 befindet wie die zu durchstrahlenden Hartgelatinekapseln 3. Wichtig ist auch, dass die Anordnung der Referenzobjekte 35 im jeweiligen Strahlungskegel 36, 37 derart ist, dass die Referenzobjekte 35 und die Hartgelatinekapseln 3 einander nicht überdecken.

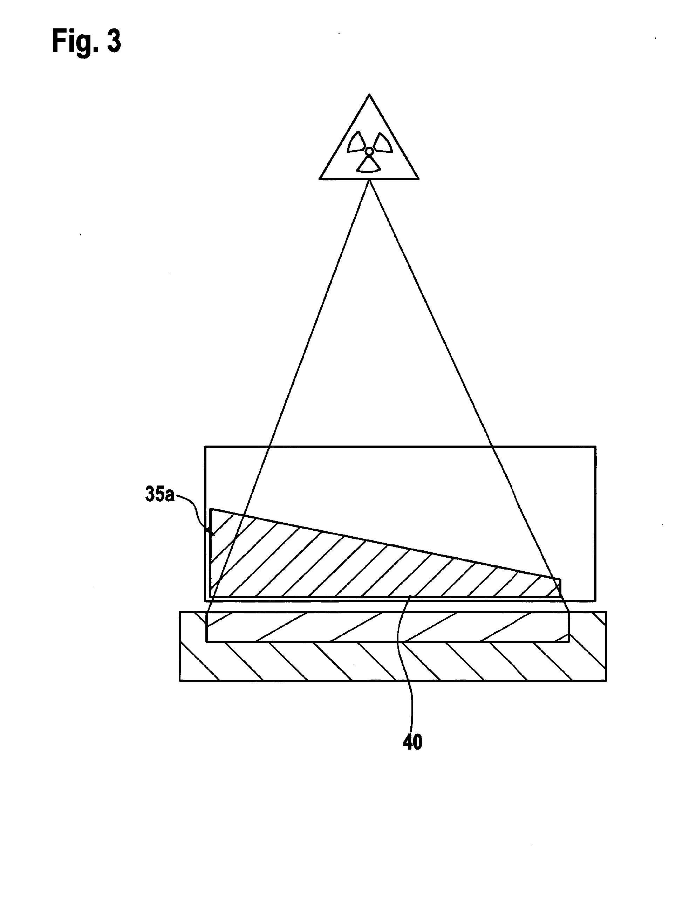

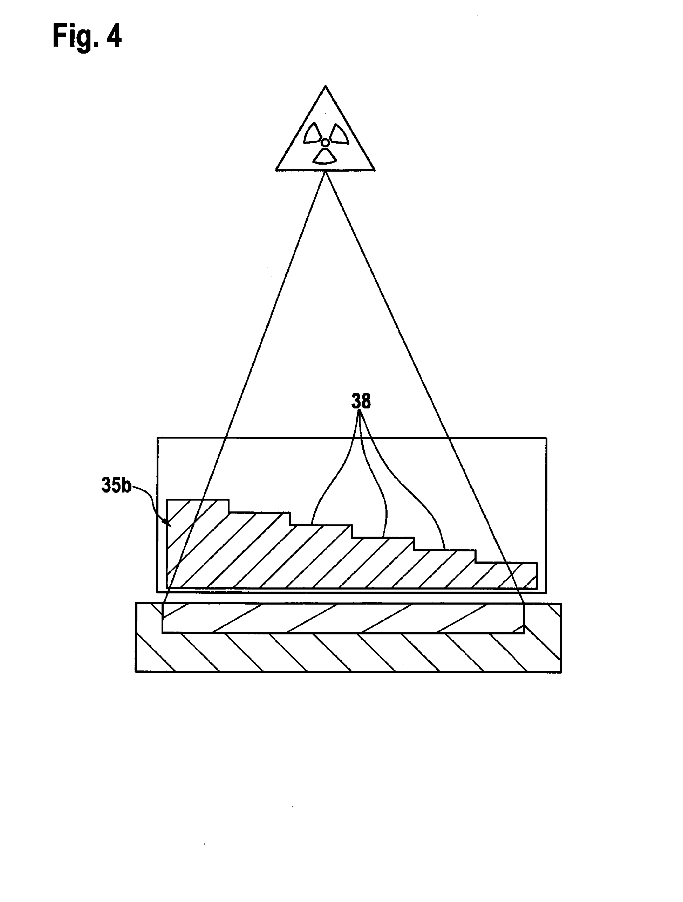

In den Fig. 3 und 4 sind verschiedene Ausführungsformen eines Referenzobjekt 35a, 35b dargestellt. Vorteilhafterweise besteht das Referenzobjekt 35a, 35b aus einem Material, das ähnliche atomare Eigenschaften aufweist wie das zu durchstrahlende pharmazeutische Produkt 1, d.h. insbesondere für die Röntgenstrahlung dieselbe Dämpfungseigenschaften aufweist. Weiterhin erkennt man, dass beide Referenzobjekte 35a, 35b über ihren Querschnitt betrachtet unterschiedliche Dicken aufweisen. Während das Referenzobjekt 35a dabei keilförmig ausgebildet ist, weist das Referenzobjekt 35b eine Reihe von Stufen 38 auf, die eine diskrete Änderung der Dicke des Referenzobjekts 35b bewirken. Vorzugsweise ist es vorgesehen, dass die Dämpfung (Grauwert) des Referenzobjekts 35a, 35b an einer Stelle größer und an einer anderen Stelle kleiner ist als die Dämpfung durch das pharmazeutische Produkt 1. Die Anordnung bzw. die Ausrichtung der Referenzobjekte 35a, 35b zum Strahlungskegel 36, 37 ist weiterhin derart, dass die Referenzobjekte 35a, 35b senkrecht zu ihrer der Röntgenstrahlungsquelle 28 zugewandten Oberfläche, das heißt senkrecht zu den Stufen 38 des Referenzobjekts 35b bzw. senkrecht zur Basis 40 des keilförmigen Referenzobjekts 35a angeordnet ist.

Wie besonders aus der Fig. 2 erkennbar ist, ist die Anordnung des Referenzobjekts 35a, 35b im jeweiligen Randbereich des Strahlungskegels 36, 37 deshalb derart, dass das Referenzobjekt 35a, 35b jeweils etwas schräg angeordnet werden muss, um die angesprochene senkrechte Durchleuchtung bzw. Durchstrahlung des Referenzobjekts 35a, 35b zu ermöglichen.

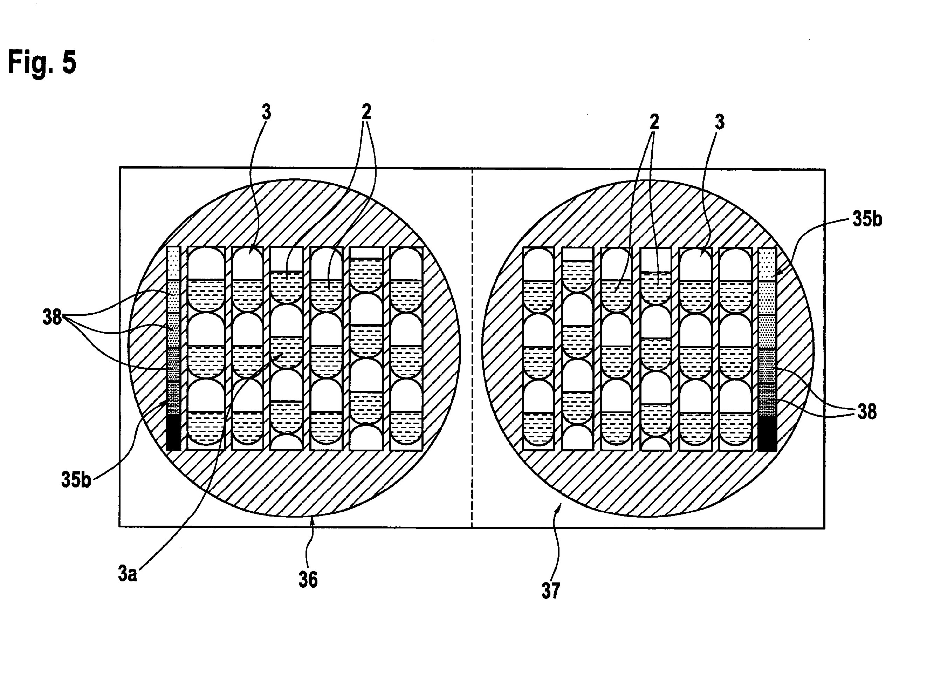

Durch die angesprochene geometrische Gestaltung der Referenzobjekte 35a, 35b weisen diese unterschiedliche Dicken auf, die bei einer Durchstrahlung mittels der Röntgenstrahlungsquelle 28 am Sensorelement 30 unterschiedliche Graustufen erzeugen. Hierzu wird auf die Fig. 5 verwiesen, in der die mittels zweier Sensorelemente 30a aufgenommenen Bilder der Einrichtung 10a gemäß der Fig. 2 vereinfacht dargestellt sind. Am linken bzw. rechten Bildrand erkennt man die beiden Referenzobjekte 35b, die im dargestellten Ausführungsbeispiel stufenförmig ausgebildet sind. Man erkennt auch, dass die einzelnen Stufen 38 unterschiedliche Grauwerte aufweisen. Ferner erkennt man im jeweiligen Bildausschnitt mehrere Hartgelatinekapseln 3 mit dem darin befindlichen Pharmazeutika 2, das ebenfalles einen bestimmten Grauwert aufweist.

Die Gewichtsbestimmung des in einer Hartgelatinekapsel 3 befindlichen Pharmazeutika 2 wird nachfolgend wie folgt erläutert: In einem nicht dargestellten, vorab stattfindenden Kalibrierprozess wird ein Bild des Referenzobjekts 35a, 35b aufgenommen, und dessen von der Sensoreinrichtung 30, 30a erfasste Grauwerte werden aufgrund der bekannten geometrischen Ausbildung des Referenzobjekts 35a, 35b den Dicken des Referenzobjekts 35a, 35b zugeordnet. Mit anderen Worten gesagt bedeutet dies, dass aufgrund eines bestimmten Grauwertes des Referenzobjekts 35a, 35b auf eine bestimmte Dicke des Referenzobjekts 35a, 35b an einer bestimmten Stelle geschlossen wird. Ferner kann aufgrund der bekannten Geometrie und der bekannten Materialeigenschaften des Referenzobjekts 35a, 35b damit einem bestimmten Grauwert des Referenzobjekts 35a, 35b eine bestimmte Dichte zugeordnet werden.

Diese vorab in dem Kalibrierprozess ermittelten Grauwerte sowie deren geometrische Zuordnung an dem Referenzobjekt 35a, 35b sind in der Auswerteeinrichtung 32 abgespeichert.

Soll nun beispielsweise das Gewicht des Pharmazeutika 2 der in der Fig. 5 mit der Bezugsziffer 3a gekennzeichneten Hartgelatinekapsel erfasst bzw. überprüft werden, so wird das von dem Sensorelement 30a erfasste Bild der Hartgelatinekapsel 3a in einzelne Bildpunkte (Pixel) aufgeteilt. Dieser Bildpunkt stellt eine bestimmte Fläche, zum Beispiel ein Quadrat mit einer Kantenlänge von 100µm, dar. Dann wird für jeden Bildpunkt der Hartgelatinekapsel 3a der erfasste Grauwert des Bildpunktes einem (identischen) Grauwert am Referenzobjekt 35a, 35b zugeordnet. Diesem Grauwert kann (aufgrund der Zuordnung der Dicken zu den Grauwerten am Referenzobjekt 35a, 35b) eine bestimmte Dicke zugeordnet werden. Nachdem dies Bildpunkt für Bildpunkt geschehen ist, wird aus einzelnen Dicken eine mittlere Dicke ermittelt. Diese mittlere Dicke wird nun mit der Gesamtanzahl der Bildpunkte und deren bekannte Fläche multipliziert, so dass ein virtuelles Volumen des Pharmazeutikas 2 bestimmt werden kann. Aus dem virtuellen Volumen kann zuletzt in Kenntnis der Dichte des Pharmazeutikas 2 das Gewicht des in der Hartgelatinekapsel 3a befindlichen Pharmazeutikas 2 ermittelt werden.

Wesentlich ist auch, dass während des Durchleuchtens der pharmazeutischen Produkte 1 jeweils gleichzeitig ein Bild des betreffenden Referenzobjekts 35a, 35b mit aufgenommen wird. Dadurch lassen sich Änderungen der Graustufen am Referenzobjekt 35a, 35b an zeitlich aufeinanderfolgenden Bildern ermitteln, die aufgrund von Störungen des Systems oder aufgrund externer Störeinflüsse auftreten können. Sollte beispielsweise festgestellt werden, dass sich der Grauwert des Referenzobjekts 35b an einer bestimmten Stufe 38 ändert, so kann die Auswerteeinrichtung 32 diesen erfassten aktuellen Grauwert mit einem Korrekturfaktor belegen, der den aktuellen Grauwert dem ursprünglichen Grauwert anpasst und somit die Störeinflüsse egalisiert.

Die soweit beschriebenen Einrichtungen 10, 10a können in vielfältiger Art und Weise abgewandelt bzw. modifiziert werden, ohne vom Erfindungsgedanken abzuweichen. Wichtig ist jedoch, dass während der Gewichtsmessung der pharmazeutischen Produkte 1 jeweils gleichzeitig das Bild eines Referenzobjekts 35, 35a, 35b mit aufgenommen wird, das zur Gewichtsbestimmung des pharmazeutischen Produkts 1 herangezogen wird. So ist es beispielsweise denkbar, dass die pharmazeutischen Produkte 1 nicht in einer Richtung durchstrahlt werden, die senkrecht zu deren Längsachse 19 verläuft. Auch kann das Referenzobjekt 35, 35a, 35b grundsätzlich an beliebiger Stelle im Strahlengang der Röntgenstrahlungsquelle 28 angeordnet sein.

## Patentansprüche

1. Einrichtung (10; 10a) zur Gewichtsbestimmung von pharmazeutischen Produkten (1), insbesondere von mit einem Pharmazeutika (2) befüllten Hartgelatinekapseln (3; 3a) mittels einer Röntgenstrahlungsquelle (28), wobei die Röntgenstrahlungsquelle (28) einen Strahlungskegel (27; 36, 37) erzeugt, der wenigstens ein pharmazeutisches Produkt (1) durchstrahlt, und wobei ein Sensorelement (30; 30a) die Strahlung des durchstrahlten pharmazeutischen Produkts (1) erfasst und einer Auswerteeinrichtung (32) zuführt,
**dadurch gekennzeichnet,**
**dass** im Strahlengang des Strahlungskegels (27; 36, 37) ein Referenzobjekt (35; 35a; 35b) angeordnet ist, wobei die Strahlung des durchleuchteten Referenzobjekts (35; 35a; 35b) mittels des Sensorelements (30; 30a; 30b) erfasst und der Auswerteeinrichtung (32) zugeführt wird, und wobei das pharmazeutische Produkt (1) und das Referenzobjekt (35; 35a; 35b) in Bezug auf den Strahlungskegel (27; 36, 37) in nicht überdeckender Anordnung zueinander im Strahlungskegel (27; 36, 37) positioniert sind.

2. Einrichtung nach Anspruch 1,
**dadurch gekennzeichnet,**
**dass** das Sensorelement als bildaufnehmendes Sensorelement (30; 30a; 30b) ausgebildet ist.

3. Einrichtung nach Anspruch 1 oder 2,
**dadurch gekennzeichnet,**
**dass** das Material des Referenzobjekts (35; 35a; 35b) eine ähnliche atomare Zusammensetzung aufweist wie das pharmazeutische Produkt (1).

4. Einrichtung nach einem der Ansprüche 1 bis 3,
**dadurch gekennzeichnet,**
**dass** das Referenzobjekt (35; 35a; 35b) in der gleichen Ebene (39) angeordnet ist wie das pharmazeutische Produkt (1).

5. Einrichtung nach einem der Ansprüche 1 bis 4,
**dadurch gekennzeichnet,**
**dass** das Referenzobjekt (35; 35a; 35b) in einer Ebene senkrecht zum Strahlungskegel (27; 36, 37) unterschiedliche Dicken aufweist.

6. Einrichtung nach Anspruch 5,
**dadurch gekennzeichnet,**
**dass** das Referenzobjekt (35a, 35b) keil- oder stufenförmig ausgebildet ist.

7. Einrichtung nach Anspruch 5 oder 6,
**dadurch gekennzeichnet,**
**dass** das Referenzobjekt (35; 35a; 35b) eine Dämpfung der Röntgenstrahlung erzeugt, die an einer Stelle größer und an einer Stelle kleiner ist als die durch das pharmazeutische Produkt (1) erzeugte Dämpfung.

8. Einrichtung nach einem der Ansprüche 5 bis 7,
**dadurch gekennzeichnet,**
**dass** die Fläche des Referenzobjekts (35; 35a; 35b) senkrecht zum Strahlungskegel (27; 36, 37) ausgerichtet ist.

9. Verfahren zur Gewichtsbestimmung von pharmazeutischen Produkten (1) mittels einer Einrichtung (10; 10a) nach einem der Ansprüche 1 bis 8, **dadurch gekennzeichnet,**
**dass** mittels der Röntgenstrahlungsquelle (28) das pharmazeutische Produkt (1) und das Referenzobjekt (35; 35a; 35b) gleichzeitig durchstrahlt werden, dass mittels wenigstens eines bildaufnehmenden Sensorelements (30; 30a) ein Bild des durchstrahlten pharmazeutischen Produkts (1) und des Referenzobjekts (35; 35a; 35b) der Auswerteeinrichtung (32) zugeführt wird, dass die Auswerteeinrichtung (32) Bildpunkt für Bildpunkt des durchstrahlten pharmazeutischen Produkts (1) auf dessen Graustufe untersucht, der Graustufe des jeweiligen Bildpunkts eine gleiche Graustufe am Referenzobjekt (35; 35a; 35b) und damit eine Dicke des Referenzobjekts (35; 35a; 35b) zuordnet, dass anschließend über alle Bildpunkte eine mittlere Dicke ermittelt wird, dass danach in Kenntnis der Anzahl und der Fläche der Bildpunkte mit Hilfe der mittleren Dicke ein virtuelles Volumne des pharmazeutischen Produkts (1) berechnet wird, und dass das virtuelle Volumen des pharmazeutischen Produkts (1) zuletzt zur Gewichtebestimmung des pharmazeutischen Produkts (1) mit der Dichte des pharmazeutischen Produkts (1) multipliziert wird.

10. Verfahren nach Anspruch 9,
**dadurch gekennzeichnet,**
**dass** bei aufeinanderfolgenden Aufnahmen die Graustufen des Referenzobjekts (35; 35a; 35b) miteinander verglichen werden, und bei einer Abweichung die aktuellen Graustufen mit einem Korrekturfaktor belegt werden.

## Claims

1. Device (10; 10a) for determining the weight of pharmaceutical products (1), in particular of hard gelatin capsules (3; 3a) filled with a pharmaceutical agent (2), using an X-ray source (28), wherein the X-ray source (28) produces a radiation cone (27; 36, 37) which transilluminates at least one pharmaceutical product (1) and wherein a sensor element (30; 30a) captures the radiation of the transilluminated pharmaceutical product (1) and feeds it to an evaluation device (32),
**characterized**
**in that** a reference object (35; 35a; 35b) is arranged in the beam path of the radiation cone (27; 36, 37), wherein the radiation of the transilluminated reference object (35; 35a; 35b) is captured using the sensor element (30; 30a; 30b) and fed to the evaluation device (32), and wherein the pharmaceutical product (1) and the reference object (35; 35a; 35b) are positioned with reference to the radiation cone (27; 36, 37) in non-covering arrangement with respect to one another in the radiation cone (27; 36, 37).

2. Device according to Claim 1,
**characterized**
**in that** the sensor element is configured as an image-recording sensor element (30; 30a; 30b).

3. Device according to Claim 1 or 2,
**characterized**
**in that** the material of the reference object (35; 35a; 35b) has a similar atomic composition as the pharmaceutical product (1).

4. Device according to one of Claims 1 to 3, **characterized**
**in that** the reference object (35; 35a; 35b) is arranged in the same plane (39) as the pharmaceutical product (1).

5. Device according to one of Claims 1 to 4, **characterized**
**in that** the reference object (35; 35a; 35b) has different densities in a plane perpendicular to the radiation cone (27; 36, 37).

6. Device according to Claim 5,
**characterized**
**in that** the reference object (35a, 35b) is wedge-shaped or step-shaped.

7. Device according to Claim 5 or 6,
**characterized**
**in that** the reference object (35; 35a; 35b) produces an attenuation of the X-rays that is greater in one place and smaller in one place than the attenuation produced by the pharmaceutical product (1).

8. Device according to one of Claims 5 to 7, **characterized**
**in that** the surface area of the reference object (35; 35a; 35b) is oriented perpendicular to the radiation cone (27; 36, 37).

9. Method for determining the weight of pharmaceutical products (1) using a device (10; 10a) according to one of Claims 1 to 8,
**characterized**
**in that** the pharmaceutical product (1) and the reference object (35; 35a; 35b) are transilluminated at the same time using the X-ray source (28), in that an image of the transilluminated pharmaceutical product (1) and of the reference object (35; 35a; 35b) is fed to the evaluation device (32) using at least one image-recording sensor element (30; 30a), in that the evaluation device (32) examines pixel after pixel of the transilluminated pharmaceutical product (1) for its grey level, assigns the grey level of the respective pixel an identical grey level on the reference object (35; 35a; 35b) and thus a density of the reference object (35; 35a; 35b), in that subsequently an average density across all pixels is ascertained, in that, knowing the number and the surface area of the pixels, a virtual volume of the pharmaceutical product (1) is then calculated using the average density, and in that the virtual volume of the pharmaceutical product (1) is finally multiplied by the density of the pharmaceutical product (1) to determine the weight of the pharmaceutical product (1).

10. Method according to Claim 9,
**characterized**
**in that** the grey levels of the reference object (35; 35a; 35b) are compared to one another in successive recordings, and in the case of a deviation a correction factor is applied to the current grey levels.

## Revendications

1. Dispositif (10 ; 10a) de détermination du poids de produits pharmaceutiques (1), notamment de capsules de gélatine dure (3 ; 3a) remplies d'un agent pharmaceutique (2) au moyen d'une source de rayons X (28), dans lequel la source de rayons X (28) génère un cône de rayonnement (27 ; 36, 37) qui irradie au moins un produit pharmaceutique (1), et dans lequel un élément capteur (30 ; 30a) détecte le rayonnement du produit pharmaceutique irradié (1) et le fournit à un dispositif d'évaluation (32),
**caractérisé en ce qu'**un objet de référence (35 ; 35a ; 35b) est disposé sur le trajet des rayons du cône de rayonnement (27 ; 36, 37), dans lequel le rayonnement de l'objet de référence examiné (35 ; 35a ; 35b) est détecté au moyen de l'élément capteur (30 ; 30a ; 30b) et est fourni au dispositif d'évaluation (32), et dans lequel le produit pharmaceutique (1) et l'objet de référence (35 ; 35a ; 35b) sont positionnés par rapport au cône de rayonnement (27 ; 36, 37) selon une relation de non-recouvrement l'un par rapport à l'autre dans le cône de rayonnement (27 ; 36, 37).

2. Dispositif selon la revendication 1, **caractérisé en ce que** l'élément capteur est réalisé sous la forme d'un élément capteur d'acquisition d'image (30 ; 30a ; 30b).

3. Dispositif selon la revendication 1 ou 2, **caractérisé en ce que** le matériau de l'objet de référence (35 ; 35a ; 35b) présente une composition atomique semblable à celle du produit pharmaceutique (1).

4. Dispositif selon l'une des revendications 1 à 3, **caractérisé en ce que** l'objet de référence (35 ; 35a ; 35b) est disposé dans le même plan (39) que le produit pharmaceutique (1).

5. Dispositif selon l'une des revendications 1 à 4, **caractérisé en ce que** l'objet de référence (35 ; 35a ; 35b) présente des épaisseurs différentes dans un plan perpendiculaire au cône de rayonnement (27 ; 36, 37).

6. Dispositif selon la revendication 5, **caractérisé en ce que** l'objet de référence (35a, 35b) présente une forme de coin ou étagée.

7. Dispositif selon la revendication 5 ou 6, **caractérisé en ce que** l'objet de référence (35 ; 35a ; 35b) génère une atténuation des rayons X qui est supérieure en une position et est inférieure en une position à l'atténuation générée par le produit pharmaceutique (1).

8. Dispositif selon l'une des revendications 5 à 7, **caractérisé en ce que** la surface de l'objet de référence (35 ; 35a ; 35b) est alignée perpendiculairement au cône de rayonnement (27 ; 36, 37).

9. Procédé de détermination du poids de produits pharmaceutiques (1) au moyen d'un dispositif (10 ; 10a) selon l'une des revendications 1 à 8, **caractérisé en ce que** le produit pharmaceutique (1) et l'objet de référence (35 ; 35a ; 35b) sont irradiés en même temps au moyen de la source de rayons X (28), **en ce qu'**une image du produit pharmaceutique irradié (1) et de l'objet de référence (35 ; 35a ; 35b) est fournie au dispositif d'évaluation (32) au moyen d'au moins un élément capteur d'acquisition d'image (30 ; 30a), **en ce que** le dispositif d'évaluation (32) examine point d'image par point d'image du produit pharmaceutique irradié (1) son niveau de gris, associe au niveau de gris de chaque point d'image un même niveau de gris sur l'objet de référence (35 ; 35a ; 35b) et ainsi, une épaisseur de l'objet de référence (35 ; 35a ; 35b), **en ce qu'**une épaisseur moyenne est ensuite déterminée sur tous les points d'image, **en ce que**, après cela, un volume virtuel du produit pharmaceutique (1) est calculé à l'aide de l'épaisseur moyenne en tenant compte du nombre et de la surface des points d'image, et **en ce que** le volume virtuel du produit pharmaceutique (1) est enfin multiplié par la densité du produit pharmaceutique (1) pour déterminer le poids du produit pharmaceutique (1).

10. Procédé selon la revendication 9, **caractérisé en ce que** les niveaux de gris de l'objet de référence (35 ; 35a ; 35b) sont comparés les uns aux autres lors d'acquisitions successives, et **en ce qu'**en cas de différence, un facteur de correction est appliqué aux niveaux de gris réels.
